Europäisches Patentamt

European Patent Office

Office européen des brevets

(19)

(11) **EP 1 404 028 A1**

(12) **EUROPEAN PATENT APPLICATION**

(43) Date of publication:
**31.03.2004 Bulletin 2004/14**

(51) Int Cl.[7]: **H04B 1/707**

(21) Application number: **02256579.0**

(22) Date of filing: **23.09.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI** | (72) Inventors:<br>• **Duppils, Mattias**<br>  **582 14 Linköping (SE)**<br>• **Svensson, Christer**<br>  **591 62 Motala (SE)** |
| (71) Applicant: **Telefonaktiebolaget L M Ericsson**<br>**(Publ)**<br>**126 25 Stockholm (SE)** | (74) Representative: **O'Connell, David Christopher**<br>**Haseltine Lake**<br>**Imperial House**<br>**15-19 Kingsway**<br>**London WC2B 6UD (GB)** |

(54) **CDMA communication system**

(57)     A method of obtaining estimates of data symbols in a spread-spectrum signal is provided, that comprises sampling (but not digitising) the received signal at an intermediate frequency, despreading the chip symbols and accumulating these data symbol estimates in the sampled-analogue domain, digitising the data symbol estimate and compensating the data estimates according to the present time channel characteristics in the digital domain.

According to this method, the digitising (analogue-to-digital conversion) will occur at a decreased sampling rate and without requiring high resolution, which will lead to decreased power consumption.

Fig. 1

## Description

## TECHNICAL FIELD OF THE INVENTION

This invention relates to a method and apparatus for extracting user data from a direct-sequence phase-shift-keying (DS/PSK) modulated signal waveform transmitted in a digital communications system.

## BACKGROUND TO THE INVENTION

Proposed universal mobile telecommunication systems (UMTS) set high demands on the electronics in portable, battery-operated units, such as mobile telephones. High user data rates, high operating frequency, low power consumption and low price are the typical competing requirements when designing the units.

The high complexity of signalling in broadband communication systems, for example WCDMA systems, suggests the processing of received waveforms in the digital domain, which leads to high demands on the analogue-to-digital interface.

In conventional all-digital spread-spectrum receiver architectures, the received signal is sampled and digitised at an intermediate frequency (IF) and is further processed in the digital domain.

In "Minimising Power Consumption in Direct Sequence Spread Spectrum Correlators by Resampling IF Samples" by W. Namgoong and T.H. Meng, IEEE Trans. Circuits Syst. II, vol. 48, no. 5, May 2001, it is stated that the power consumption in such all-digital receivers is excessive, since digital correlation computations are performed at an unnecessarily high sample rate. To solve this problem, a resampling procedure is proposed that leads to each chip symbol being represented by two samples only.

In "Low Power Mixed Analog-Digital Signal Processing" by Mattias Duppils and Christer Svensson, ISLPED, 2000, an implementation is proposed for reducing the power consumption of mixed-signal systems featuring an analogue front-end, a digital back-end and signal processing tasks that can be computed with multiplications and accumulations. The implementation comprises switched-capacitor mixed analogue/digital multiply accumulate units in the analogue front-end followed by an A/D converter. The power consumption is reduced compared to an equivalent implementation with a high speed A/D converter in the front-end.

## SUMMARY OF THE INVENTION

A method of retrieving user data from a direct-sequence spread-spectrum (DS-SS) signal waveform at an intermediate frequency is required that does not require the waveform to be split into in-phase and quadrature components and that provides an implementation that is competitive in circuit complexity and power consumption compared to all-digital architectures.

According to the present invention, a method of obtaining user data estimates from a DS-SS signal is provided that comprises sampling (but not digitising) the received signal at an intermediate frequency, estimating the chip symbols and accumulating these data symbol estimates in the sampled-analogue domain, digitising the grand-total data symbol estimate and compensating the data estimates according to the present time channel characteristics in the digital domain.

According to this method, the digitising (analogue-to-digital conversion) will occur at a decreased sampling rate and with decreased resolution, which will lead to decreased power consumption.

It should be emphasised that the term "comprises/comprising" when used in this specification is taken to specify the presence of stated features, integers, steps or components but does not preclude the presence or addition of one or more other features, integers, steps, components or groups thereof.

## BRIEF DESCRIPTION OF THE DRAWINGS

Figure 1 shows a communications system in accordance with the present invention.

Figure 2 shows a correlation receiver in accordance with the invention.

Figure 3 shows pairs of despreading sequences for particular spreading coefficients.

Figure 4 shows a correlation receiver in accordance with a preferred embodiment of the invention.

**EP 1 404 028 A1**

Figure 5 shows an example of two chip waveforms, representing a single data symbol, of a DS/QPSK modulated waveform received by the correlation receiver.

Figure 6 shows the sampling points of the waveforms of Figure 5.

Figure 7 shows two pairs of chip-local despreading sequences corresponding to two successive chip waveforms.

Figure 8 shows data-symbol estimates obtained as the product of the sampled waveform shown in Figure 6 and the chip-local despreading sequences shown in Figure 7.

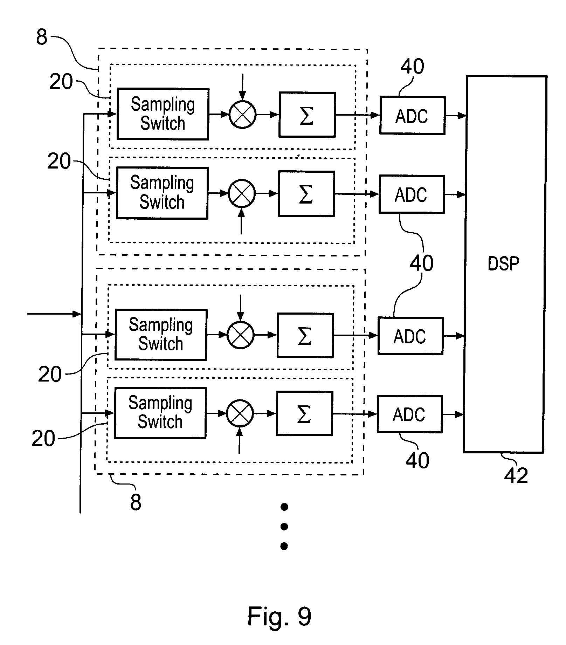

Figure 9 shows a RAKE receiver in accordance with the invention.

## DETAILED DESCRIPTION OF THE PREFERRED EMBODIMENTS

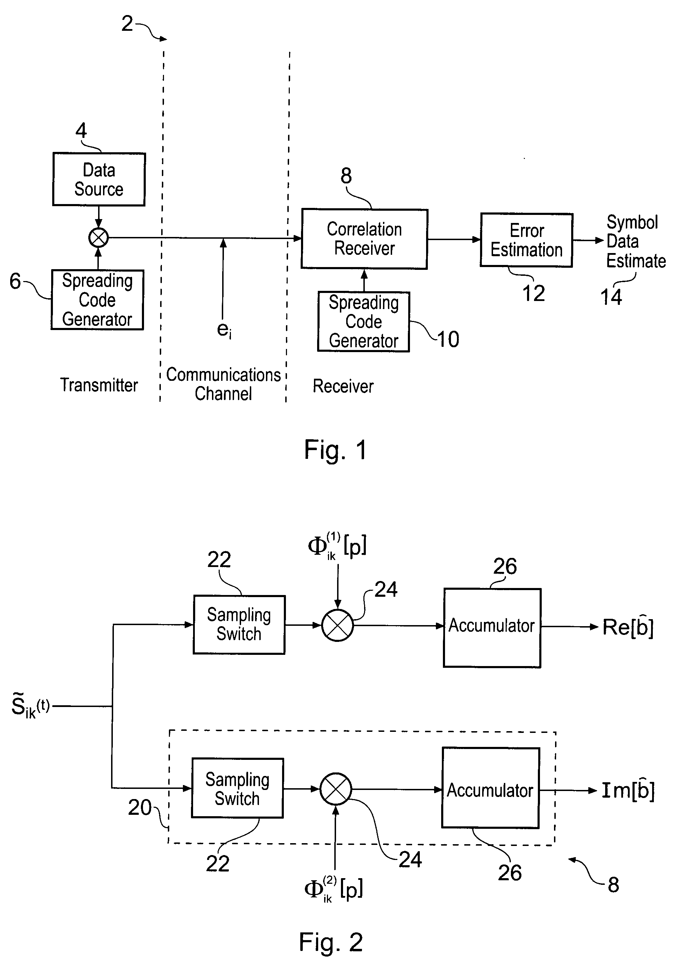

Figure 1 shows a direct-sequence spread-spectrum communications system. In the communications system 2, user data, hereinafter referred to as symbol data, is provided by a data source 4 and is multiplied with a spreading sequence generated by the spreading code generator 6. Each data symbol, which may represent one or several digital bits, is associated with a spreading sequence that consists of N elements. The product sequence of a single data symbol and an associated spreading sequence is referred to as encoded sequence. The elements of the encoded sequence are called encoded symbols or chip symbols. These encoded symbols are subsequently modulated using techniques well known in the art, one example of which is quadrature phase-shift-keying (QPSK). There is a relation between the modulation and the spreading code and symbol data format. For QPSK modulation, the format is complex-valued antipodal, that is, it assumes the values $\{(\pm 1, \pm j)/\sqrt{2}\}$.

The bandwidth of this modulated waveform is a factor N larger than the bandwidth of the modulated data symbols, and for this reason N is also referred to as the bandwidth expansion factor, or spreading factor.

The receiver 8 receives each symbol data during N chips, and then computes symbol data estimates 14 by despreading the encoded symbols and accumulating these values. This integrating process leads to a processing gain or gain boost of the received signal amplitude by a factor N.

In the transmitter, the ith symbol data $b_i$ from the data source 4 is encoded with the ith spreading sequence $\mathbf{a}_i$, generated by the spreading code generator 6, which is defined as

$$a_i = [a_i[1]\ a_i[2]\ ...\ a_i[N]]$$

The complex-valued encoded sequence $\mathbf{s}_i$ is computed

$$s_i = b_i \cdot a_i$$

The encoded sequence is modulated to a signal waveform and is transmitted over the physical communication channel.

The transmitted waveform propagates through a physical channel that affects the amplitude and phase of the waveform. This is represented by multiplying the encoded sequence with a channel propagation sequence (in complex form) $\mathbf{e}_i$. The ith sequence captured by the receiver 8 is thus

$$s_i \cdot e_i$$

The receiver 8 correlates the captured sequence with the complex conjugate of the spreading sequence $\mathbf{a}_i^*$, which is provided by the second spreading code generator 10. This leads to a sequence of data symbol estimates affected by the channel characteristics

$$b_i \cdot e_i = b_i \cdot a_i \cdot a_i^* \cdot e_i = (s_i \cdot e_i)\ \cdot a_i^*$$

where $\mathbf{a}_i \cdot \mathbf{a}_i^*$ is the unity element sequence since the product of a complex number with its complex conjugate is always real valued. Accumulating these data estimates affected by the channel leads to

$$b_i \cdot N \cdot \overline{\mathbf{e}}_i = \sum_{k=1}^{N} b_i \cdot e_i[k]$$

where $\overline{\mathbf{e}}_i$ is defined as the average channel propagation phase.

It is assumed that the channel characteristics change slowly, that is, they change more slowly than the duration of the data symbols such that the phase of the elements in $\mathbf{e}_i$ is approximately equal to the phase of $\overline{\mathbf{e}}_i$.

The average channel propagation phase is estimated by the error estimator 12 using methods well known in the art, and this estimate is denoted $\widehat{\overline{\mathbf{e}}}_i$. The symbol data estimate 14 is finally computed as

$$\widehat{b}_i = b_i \cdot N \cdot \overline{\mathbf{e}}_i \cdot \widehat{\overline{\mathbf{e}}}_i^{\,*}$$

where $\widehat{\overline{\mathbf{e}}}_i^{\,*}$ is the complex-valued conjugate of the average channel propagation phase estimate $\widehat{\overline{\mathbf{e}}}_i$.

The receiver shown in Figure 1 may be implemented in a mobile communications device or any other form of portable radio communication equipment or mobile radio terminal, such as a mobile telephone, pager, communicator, electronic organiser, smartphone, personal digital assistant (PDA), or the like. In addition, the receiver may also be used in devices that are not themselves mobile, such as a base station.

In a direct-sequence spread-spectrum system that uses QPSK modulation, the correlation receiver 8 computes real and imaginary part estimates of the data symbol by correlating successive sampled chip waveforms with cosine and sine shaped coefficient sequences respectively, whose phases are chosen according to the actual elements of the spreading sequence.

Figure 2 shows a correlation receiver 8 in accordance with the invention. Each component of the DS/PSK modulated waveform is decoded using a sampled-analogue multiplier accumulator 20 that comprises a sampling switch 22, an analogue multiplier 24 and an accumulator 26.

The sampling switch 22 (sample-and-hold circuit) is able to track the analogue signal $S_{ik}(t)$ and hold its instantaneous value at a controlled sampling instant (i.e. the instant that the switch opens). The analogue multiplier 24 computes the product of the sampled analogue value and a digitally controllable coefficient. The value of the accumulator 26 can be read out at any time to following circuitry, for example an analogue-to-digital converter.

By using a sampled-analogue multiplier accumulator in the correlation receiver 8, signal-processing operations occur in the sampled-analogue domain.

In the correlation receiver 8, the sampling clock $f_s$ is a multiple X of the carrier frequency

$$f_s = X \frac{\omega_{IF}}{2\pi}$$

and the grid of allowed sampling instants is defined as a grid with instants separated by $T_s$ time units. $T_s$ is defined as the sampling clock period and is related to the sampling clock frequency $f_s$ as

$$T_s = {}^{1}\!/_{f_s}$$

The encoded symbol waveforms define an integer number, m, of carrier periods. That is, the waveform may potentially be sampled in X.m instants.

The chip-local despreading sequences $\Phi_{ik}^{(1)}$, $\Phi_{ik}^{(2)}$ are defined as sequences whose elements are multiplicative coefficients, such that the linear combination of these sequences with the sampled waveform leads to an estimate of the transmitted data symbol $b_i$. The sequences contain multiplicative coefficients dedicated to each instant in the grid of allowed sampling instants.

It should be noted that the actual sampling of the waveform only occurs at sampling instants where the associated multiplicative coefficient has a non-zero value.

The multiplicative coefficients are calculated as a product of the instantaneous value of the basis functions $\phi_{ik}^{(1)}[t]$, $\phi_{ik}^{(2)}[t]$,

$$\phi_{ik}^{(1)}[t] \cos(\omega_{IF}t - \arg[a_i[k]])$$

$$\phi_{ik}^{(2)}[t] = \sin(\omega_{IF}t - \arg[a_i[k]])$$

at the instants $t = (p-1)T_s$, where $p = 1, 2, \ldots X \cdot m$, and the weighting coefficients $W_{ik}^{(1)}[p]$, $W_{ik}^{(2)}[p]$, which are chosen according to practical aspects. Therefore, the multiplicative coefficients can be expressed as

$$\begin{cases} \Phi_{ik}^{(1)}[p] = \phi_{ik}^{(1)}((p-1) \bullet T_s) \cdot W_{ik}^{(1)}[p] \\ \Phi_{ik}^{(2)}[p] = \phi_{ik}^{(2)}((p-1) \bullet T_s) \cdot W_{ik}^{(2)}[p] \end{cases}$$

The weighting sequences $\mathbf{W}_{ik}^{(1)}$, $\mathbf{W}_{ik}^{(2)}$ for the $k$th chip waveform representing the $i$th data symbol are defined as

$$W_{ik}^{(1)} = [W_{ik}^{(1)}[1] \qquad W_{ik}^{(1)}[2] \qquad \ldots \qquad W_{ik}^{(1)}[Xm]]$$

$$W_{ik}^{(2)} = [W_{ik}^{(2)}[1] \qquad W_{ik}^{(2)}[2] \qquad \ldots \qquad W_{ik}^{(2)}[Xm]]$$

The chip-local despreading sequences $\Phi_{ik}^{(1)}$, $\Phi_{ik}^{(2)}$ are thus

$$\Phi_{ik}^{(1)} = [\Phi_{ik}^{(1)}[1] \qquad \Phi_{ik}^{(1)}[2] \qquad \ldots \qquad \Phi_{ik}^{(1)}[Xm]]$$

$$\Phi_{ik}^{(2)} = [\Phi_{ik}^{(2)}[1] \qquad \Phi_{ik}^{(2)}[2] \qquad \ldots \qquad \Phi_{ik}^{(2)}[Xm]]$$

The pairs of despreading sequences with associated weighting sequences are typically bound for each spreading code in the spread-spectrum receiver (there are four codes utilized with DS/QPSK modulation in total).

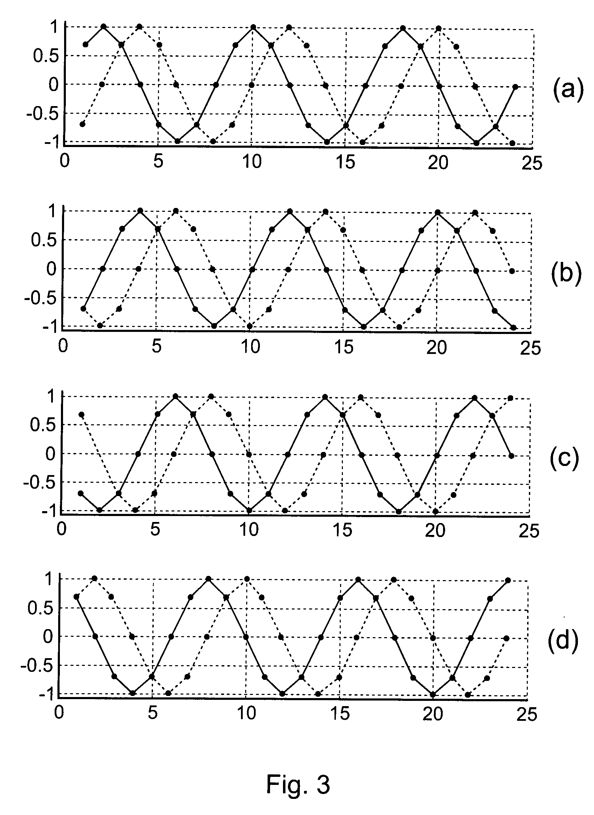

For ease of illustration of spreading sequences, the following simple example is presented with reference to Figure 3.

In this example, all weighting coefficients are chosen equal to unity, i.e.

$$\begin{cases} W_{ik}^{(1)}[p] = 1 \\ W_{ik}^{(2)}[p] = 1 \end{cases}$$

for all i, k and p. Therefore, in this example, the sampling of the waveform will occur each sampling instant, as each associated multiplicative coefficient has a non-zero value.

The chip-local despreading sequences are

$$\Phi_{ik}^{(1)} = [\cos(-\arg[a_i[k]]) \qquad \cos(\omega_{IF}T_s - \arg[a_i[k]]) \ldots$$

$$\cos(\omega_{IF}(Xm-1)T_s - \arg[a_i[k]])$$

$$\Phi_{ik}^{(2)} = [\sin(-\arg[a_i[k]]) \qquad \sin(\omega_{IF}T_s - \arg[a_i[k]]) \ldots$$

$$\sin(\omega_{IF}(Xm-1)T_s - \arg[a_i[k]])]$$

As shown, the chip-local despreading sequences used to compute the part estimate of the data symbol are chosen with respect to the spreading code $a_i[k]$ utilized at the generation of the chip waveform.

The pair of chip-local despreading sequences are utilized to calculate the real part and imaginary part estimates of the data symbol.

In this illustration the number of IF periods per chip and the number of samples per IF period are chosen as m = 3, and X = 8 respectively.

Figures 3 (a), (b), (c) and (d) show the pair of chip-local despreading sequences for the spreading coefficients a=1+j, a=-1+j, a=-1-j and a=1-j respectively. In each Figure, the solid line connects the elements in $\Phi_{ik}^{(1)}$ and the dashed line connects the elements in $\Phi_{ik}^{(2)}$.

In accordance with the invention, weighting sequences are selected whose coefficients are not all equal to unity. This means that at a sampling instant where the multiplicative coefficient of the chip-local despreading sequences is zero-valued, ho sampling of the waveform occurs, i.e. the sampling switch 22 is not opened. This leads to a reduction in the sampling rate of the receiver, and hence a reduction in the power consumed.

The weighting sequences must be carefully chosen so that appropriate parts of the waveform are sampled. For example, selecting the weighting sequences so that the sampling occurs in the middle of the chip waveform, rather than at the beginning and/or end of the chip waveform, may provide more significant information.

It should be noted that the weighting sequences may have any number of coefficients set to unity or zero, but in this illustrated embodiment, only two coefficients are chosen to be non-zero. The number of non-zero coefficients chosen will depend upon the particular requirements on the power consumption of the receiver.

In this illustrated embodiment, the carrier period m = 3, and X = 8, so the spreading sequences and weighting sequences have 24 coefficients. The weighting sequences are chosen with respect to the spreading code $a_i[k]$ as shown below:

When $a_i[k]=(1 + j)/\sqrt{2}$ the pair of weighting sequences are chosen

$$W_{ik}^{(1)} = [0,0,0,0,0,0,0,0,0,1,0,0,0,1,0,0,0,0,0,0,0,0,0,0]$$

$$W_{ik}^{(2)} = [0,0,0,0,0,0,0,0,0,0,0,1,0,0,0,1,0,0,0,0,0,0,0,0]$$

so the chip-local despreading sequences are

$$\Phi_{ik}^{(1)} = [0,0,0,0,0,0,0,0,0,1,0,0,0,-1,0,0,0,0,0,0,0,0,0,0]$$

$$\Phi_{ik}^{(2)} = [0,0,0,0,0,0,0,0,0,0,0,1,0,0,0,-1,0,0,0,0,0,0,0,0]$$

The sampling instant and coefficient pairs become $(9.T_s, 1)$, $(13.T_s, -1)$, used to compute the real part of the data symbol estimate, and $(11.T_s, 1)$, $(15.T_s,-1)$, used to compute the imaginary part of the data symbol estimate.

When $a_i[k] =(-1 + j)/\sqrt{2}$ the pair of weighting sequences are chosen

$$W_{ik}^{(1)} =[0,0,0,0,0,0,0,0,0,0,0,1,0,0,0,1,0,0,0,0,0,0,0,0]$$

$$W_{ik}^{(2)} = [0,0,0,0,0,0,0,0,0,1,0,0,0,1,0,0,0,0,0,0,0,0,0,0]$$

so the chip-local despreading sequences are

$$\Phi_{ik}^{(1)} = [0,0,0,0,0,0,0,0,0,0,0,1,0,0,0,-1,0,0,0,0,0,0,0,0]$$

$$\Phi_{ik}^{(2)} = [0,0,0,0,0,0,0,0,0,-1,0,0,0,1,0,0,0,0,0,0,0,0,0,0]$$

The sampling instant and coefficient pairs become $(11.T_s, 1)$, $(15.T_s, -1)$, used to compute the real part of the data symbol estimate, and $(9.T_s, -1)$, $(13.T_s,1)$, used to compute the imaginary part of the data symbol estimate.

When $a_i[k] =(-1 - j)/\sqrt{2}$ the pair of weighting sequences are chosen

$$W_{ik}^{(1)} =[0,0,0,0,0,0,0,0,0,1,0,0,0,1,0,0,0,0,0,0,0,0,0,0]$$

$$W_{ik}^{(2)} = [0,0,0,0,0,0,0,0,0,0,0,1,0,0,0,1,0,0,0,0,0,0,0,0]$$

so the chip-local despreading sequences are

$$\Phi_{ik}^{(1)} = [0,0,0,0,0,0,0,0,0,-1,0,0,0,1,0,0,0,0,0,0,0,0,0]$$

$$\Phi_{ik}^{(2)} = [0,0,0,0,0,0,0,0,0,0,0,-1,0,0,0,1,0,0,0,0,0,0,0,0]$$

The sampling instant and coefficient pairs become $(9.T_s, -1)$, $(13.T_s, 1)$, used to compute the real part of the data symbol estimate, and $(11.T_s, -1)$, $(15.T_s, 1)$, used to compute the imaginary part of the data symbol estimate.

When $a_i[k]=(1 - j)/\sqrt{2}$ the pair of weighting sequences are chosen

$$W_{ik}^{(1)} = [0,0,0,0,0,0,0,0,0,0,0,1,0,0,0,1,0,0,0,0,0,0,0,0]$$

$$W_{ik}^{(2)} = [0,0,0,0,0,0,0,0,0,1,0,0,0,1,0,0,0,0,0,0,0,0,0]$$

so the chip-local despreading sequences are

$$\Phi_{ik}^{(1)} = [0,0,0,0,0,0,0,0,0,0,0,-1,0,0,0,1,0,0,0,0,0,0,0,0]$$

$$\Phi_{ik}^{(2)} = [0,0,0,0,0,0,0,0,0,1,0,0,0,-1,0,0,0,0,0,0,0,0,0]$$

The sampling instant and coefficient pairs become $(11.T_s, -1)$, $(15.T_s, 1)$, used to compute the real part of the data symbol estimate, and $(9.T_s, 1)$, $(13.T_s,-1)$, used to compute the imaginary part of the data symbol estimate.

The grand-total data-symbol estimate is computed by continuously accumulating coefficient-sample products until the end of the data symbol waveform. The waveform representing the ith symbol data, $b_i(t)$, is sampled with sampling clock frequency $f_s$ at the instants $t = (p-1) \cdot T_s$, where $p = 1, 2,..., X \cdot m \cdot N$, except at the instants when the multiplicative coefficients are zero-valued.

The sequence representing these sampled values is denoted $\mathbf{B_i}$

$$B_i = [b_i(0) \; b_i(T_s)... \; b_i((XmN-1).T_s)]$$

where $B_i[1]=b_i(0)$ and $B_i[p]=b_i((p-1) . T_s)$.

The sampled correlation receiver 8 computes the symbol data estimate as

$$\hat{b}_i = \begin{cases} \mathrm{Re}\left[\hat{b}_i\right] = \sum_{k=1}^{N} \sum_{p=1}^{Xm} B_i\left[(k\text{-}1).Xm + p\right] \Phi_{ik}^{(1)}[p] \\ \mathrm{Im}\left[\hat{b}_i\right] = \sum_{k=1}^{N} \sum_{p=1}^{Xm} B_i\left[(k\text{-}1).Xm + p\right] \Phi_{ik}^{(2)}[p] \end{cases}$$

where $\Phi_{ik}^{(1)}[p]$, $\Phi_{ik}^{(2)}[p]$ are the $p$th multiplicative coefficients of the $k$th chip symbol representing the $i$th symbol data.

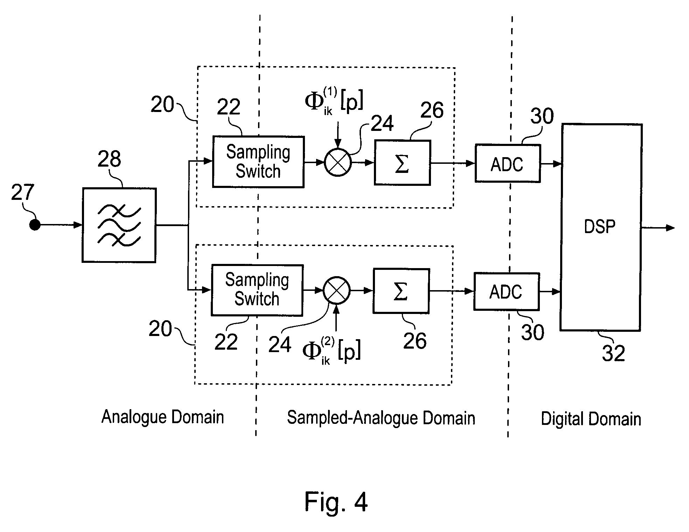

One specific application of the present invention is in sampling and decoding a DS/QPSK modulated signal at an intermediate frequency (IF). This preferred embodiment is described below with reference to Figure 4.

As in Figure 2, the DS-SS correlation receiver comprises two sampled-analogue multiplier accumulator units 20. The real and imaginary parts of the data symbol estimate are processed in separate units 20. The sampled-analogue multiplier accumulator units 20 each comprise a respective sampling switch 22, analogue multiplier 24 and accumulator 26. These units 20 are preceded by a conventional analogue receiver 27, and an analogue-domain band-select filter 28 that selects a suitable intermediate frequency (IF).

The sampling switch 22 (sample-and-hold circuit) tracks the analogue signal and holds its instantaneous value at a controlled sampling instant (i.e. the instant that the switch opens). The analogue multiplier 24 computes the product of the sampled analogue value and a digitally controllable coefficient. The value of the accumulator 26 is read out by the analogue-to-digital converter 30 operating at the data symbol rate.

In QPSK modulation, successive chip waveforms assume one of four phases corresponding to the phase angle of the encoded symbols. As described above, the received chip waveforms are sampled, weighted according to the chip-local despreading sequences, and accumulated in two channels. The correlation receiver also includes a digital signal-processing unit 32 for post processing of the decoded symbols. For example the digital signal-processing unit 32 can compensate for any amplitude and phase errors caused by transmission over the air interface.

The carrier frequency for transmitting the encoded symbols to the correlation receiver is chosen as a multiple m of the chip rate

$$\omega_{IF} = 2\pi.m.R_{chip}, \, m \geq 1$$

The sampling clock frequency $f_s$ is chosen to be four times the carrier frequency

$$f_s = 4 \, \frac{\omega_{IF}}{2\pi}$$

In DS/QPSK communications systems, the data symbol $b_i$ and the elements in the spreading sequence $a_i$ are complex-valued antipodal. That is they assume the values $\{(\pm 1, \pm j)/\sqrt{2}\}$. The encoded sequence $s_i$ is computed on the transmitted side as

$$s_i = b_i \, . \, a_i$$

The symbols in the encoded sequence are modulated using a QPSK encoder, and transmitted over an air interface that affects the phase and amplitude of the waveform. A requirement for computing the data symbol estimates is that the channel characteristics must change slowly compared to the symbol data duration, that is the change in phase error from the first chip waveform to the last chip waveform representing a symbol data must be considerably less than $\pi/4$.

The phase of the sampling clock relative to the arrival time of the chip waveform gives rise to an additional phase error. The channel propagation error sequence (in complex form) $e_i$, accounts for all amplitude and phase error from the transmitted chip waveform to captured waveform, including the sampling phase error.

The correlation receiver computes the data symbol estimates with errors as

$$b_i.e_i = s_i.e_i.a_i{}^* = b_i.a_i.a_i{}^*.e_i$$

which gives the accumulated grand-total symbol-data estimate as

$$b_i . N . \bar{e}_i \; = \; \sum_{k=1}^{N} b_i . e_i[k]$$

where $\bar{e}_i$ is the average channel propagation phase.

The waveform captured by the receiver is denoted $\tilde{b}_i(t)$, which is the originally transmitted waveform $b_i(t)$ affected by the channel in amplitude and phase, and delayed in time.

The correlation receiver may sample the captured waveform at the instants $t = (p-1) \cdot T_s$, $p = 1, 2, ..., K, ..., 4 \cdot m \cdot N$. The sequence representing these samples values is denoted $B_i$ where

$$B_i = \left[ \tilde{b}_i(0) \quad \tilde{b}_i(T_s) \ldots \tilde{b}_i(KT_s) \ldots \tilde{b}_i((4mN-1).T_s) \right]$$

The two sampled-analogue multiplier-accumulator units 20 compute the grand-total data-symbol estimate with phase error according to

$$b_i.N.\vec{e}_i = \begin{cases} \operatorname{Re}\left[\hat{b}_i.\vec{e}_i\right] = \sum_{k=1}^{N}\sum_{p=1}^{4m} B_i\left[(k-1).4m+p\right]\Phi_{ik}^{(1)}[p] \\[12pt] \operatorname{Im}\left[\hat{b}_i.\vec{e}_i\right] = \sum_{k=1}^{N}\sum_{p=1}^{4m} B_i\left[(k-1).4m+p\right]\Phi_{ik}^{(2)}[p] \end{cases}$$

Finally, to compute the data symbol estimate, an estimate of the channel propagation phase $\bar{e}_i$ is required. This estimate, denoted $\hat{\bar{e}}_i$, is computed using methods known in the art, and will not be described further herein.

The symbol data estimate is finally computed (by computing elements within the DSP 32 in Figure 4) as

$$\hat{b}_i = b_i.N.\bar{e}_i.\hat{\bar{e}}_i{}^*$$

where $\hat{\bar{e}}_i{}^*$ is the complex-valued conjugate of the channel propagation phase estimate $\hat{\bar{e}}_i$.

As an example, the symbol data and the spreading sequence are $b_1 = (1 - j)/\sqrt{2}$ and $\mathbf{a}_1 = [- 1 + j , -1 - j]/\sqrt{2}$ respectively. The encoded sequence is computed $\mathbf{s}_1 = b_1. \mathbf{a}_1$ and hence becomes

$$s_1 = [(1 - j)/\sqrt{2}].[- 1 + j, -1-j]/\sqrt{2} = [j, -1]$$

The chip duration lasts for m = 3 periods on the carrier with frequency $\omega_{IF} = 2\pi$, that is the chip duration $T_{chip}$ = 3, and the carrier period $T_{IF} = 1$.

Further, the rectangular window of width $T_{chip}$ is utilized as the baseband shaping function p(t).

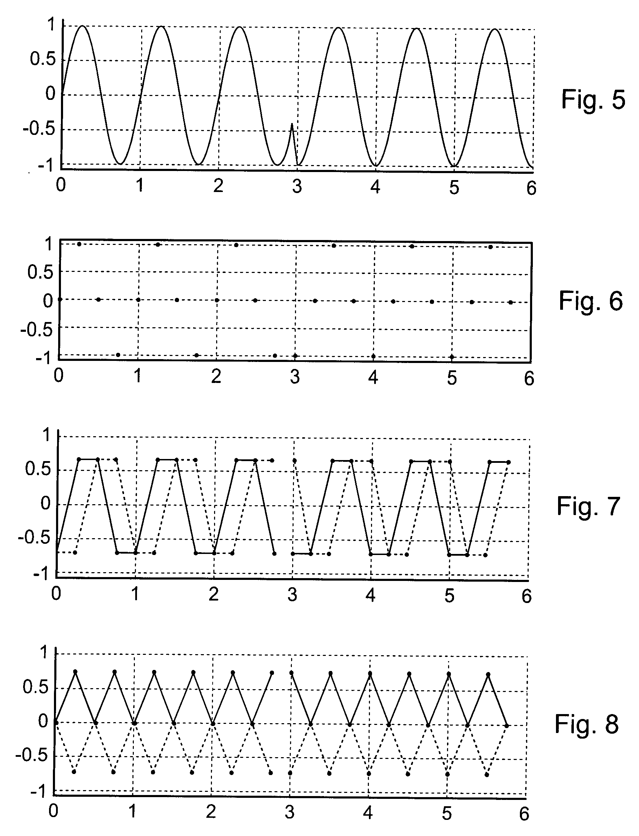

The modulated waveform $b_1(t)$, illustrated in Figure 5, is computed

$$b_1(t) = \cos(2\pi t - \pi/2).p(t) + \cos(2\pi t - \pi).p(t - T_{chip})$$

where $\theta_1[1] = \pi/2$ and $\theta_1[2] = \pi$. The waveform is sampled at the instants $t = (p-1)\cdot T_s$, p = 1, 2, ..., 24. The sampled waveform is shown in Figure 6, which therefore illustrates the sampled values of the received waveform, which comprises two chips. Each chip waveform has a duration of three periods of the carrier waveform, and the sampling rate is four times the frequency of the carrier waveform. The chip-local despreading sequences for the first chip become:

$$\begin{cases} \Phi_{11}^{(1)} = \left[\cos(-3\pi/4) \quad \cos(\pi/2-3\pi/4) \quad \ldots \quad \cos(11\pi/2-3\pi/4)\right] \\[8pt] \Phi_{11}^{(2)} = \left[\sin(-3\pi/4) \quad \sin(\pi/2-3\pi/4) \quad \ldots \quad \sin(11\pi/2-3\pi/4)\right] \end{cases}$$

and the chip-local despreading sequences for the second chip become:

$$\begin{cases} \Phi_{12}^{(1)} = \left[\cos(-5\pi/4) \quad \cos(\pi/2-5\pi/4) \quad \ldots \quad \cos(11\pi/2-5\pi/4)\right] \\[8pt] \Phi_{12}^{(2)} = \left[\sin(-5\pi/4) \quad \sin(\pi/2-5\pi/4) \quad \ldots \quad \sin(11\pi/2-5\pi/4)\right] \end{cases}$$

In this example, all weighting coefficients are chosen to be equal to unity. That is,

$$\begin{cases} W_{ik}^{(1)}[p] = 1 \\ W_{ik}^{(2)}[p] = 1 \end{cases}$$

for all *i, k, p*. The resulting chip-local despreading sequences are illustrated in Figure 7, in which the solid line and the dashed line represent the despreading coefficients for the real and imaginary parts respectively.

The two sampled-analogue multiplier-accumulator units 20 compute the product of the sampled values and the coefficients in the chip-local despreading sequences. These products are illustrated in Figure 8. Again, a solid line represents the real part product, and a dashed line represents the imaginary part product.

The real and imaginary products are accumulated independently, which leads to a complex-valued sum that constitutes the data symbol estimate. This complex-valued sum is calculated as:

$$\hat{b}_1 = \frac{12}{\sqrt{2}} (1 - j) = 8.5 - j\, 8.5$$

which is expected. In QPSK modulation, the data information is represented as phase angles, and in this example we see that the phase angle of the transmitted symbol and the phase angle of the estimated data symbol are identical. The transmitted data symbol is $b_1 = (1-j)/\sqrt{2}$, and

$$\begin{cases} \arg(b_1) = -\pi/4 \\ \arg(\hat{b}_1) = -\pi/4 \end{cases}$$

According to a second aspect of the present invention, there is provided a RAKE receiver in which the multiple RAKE fingers are implemented using the sampled-analogue correlation receiver described above.

In practical communication environments, the space between the transmitter and receiver contains obstacles. A single transmitted wave reflects off these obstacles and hence a waveform may propagate by several paths before entering the receiver. This causes several delayed versions of the single transmitted waveform to be received.

A consequence of this is that the transmitted signal energy is divided between the paths. In order to collect a major part of the transmitted signal energy, the receiver must be able to collect and weight these delayed signal waveforms. Such a receiver is known as a RAKE receiver that has multiple 'fingers', where each 'finger' receives the signal waveform that has propagated over a single path.

As shown in Figure 8, a RAKE receiver is constructed using a bank of sampled-analogue correlation receivers 8 that each comprise two sampled-analogue multiplier-accumulator units 20. Although only two 'fingers' are shown, it will be appreciated that the RAKE receiver may have any number of fingers. The outputs of the correlation receivers are digitised using analogue-to-digital converters 40 and are passed into a digital signal processing unit 42.

The procedure for operating a RAKE receiver is well known in the art, and will only be described briefly.

The signal energy received by the RAKE receiver is analysed to determine the times at which the received signal energy peaks. The difference between the times of reception of the peaks provides an indication of the time delay incurred by the signal as it propagated over the air interface. Once several distinct paths (with their own associated time delay) have been determined, each path is allocated to a correlation receiver 'finger' 8 in the RAKE receiver. Each correlation receiver 8 then demodulates its part of the received signal. Finally, the output from each of the fingers 8 is passed to the digital signal processor 42. The digital signal processor 42 synchronises the outputs from each 'finger' 8 of the RAKE receiver, compensates for amplitude and phase distortion caused by transmission over the air interface, and combines the outputs to provide a suitable signal for decoding.

There is therefore provided a technique for retrieving user data from a direct-sequence spread-spectrum (DS-SS) signal waveform at an intermediate frequency that does not require the waveform to be split into in-phase and quadrature components and that provides an implementation that is competitive in circuit complexity and power consumption compared to all-digital architectures.

**Claims**

1. A method for retrieving a transmitted data symbol from a direct-sequence phase-shift-keying modulated signal waveform, wherein the signal waveform representing the data symbol comprises N chip waveforms, the transmitted data symbol is encoded using a spreading sequence comprising N elements to form an encoded sequence comprising N encoded symbols and each encoded symbol is represented by a chip waveform, the method comprising:

   for each encoded symbol:

      obtaining the analogue value of the chip waveform at a plurality of sampling instants, the sampling instants occurring at irregularly spaced intervals within the chip waveform;
      despreading the encoded symbol represented by the chip waveform by multiplying each sampled analogue value by a coefficient derived from the corresponding element in the spreading sequence to obtain a part estimate of the data symbol; and
      accumulating the obtained part estimates to form an estimate of the transmitted data symbol.

2. A method as claimed in claim 1, the method further comprising the step of:

   digitising the estimate of the transmitted data symbol.

3. A method as claimed in claim 1 or 2, the method further comprising:

   compensating the estimate of the transmitted data symbol for distortion caused by propagation of the signal waveform over the air interface.

4. A method as claimed in one of claims 1, 2 or 3, wherein analogue values of the chip waveform are obtained at two sampling instants in each chip waveform.

5. A method as claimed in any preceding claim, wherein the transmitted data symbol comprises a real part and an imaginary part and the method further comprises computing the estimate of the real part and imaginary part of the transmitted data symbol separately.

6. A method as claimed in any preceding claim, wherein the modulation technique is quadrature phase-shift-keying QPSK.

7. A correlation receiver for retrieving a transmitted data symbol from a direct-sequence phase-shift-keying modulated signal waveform, wherein the signal waveform comprises N chip waveforms, the transmitted data symbol is encoded using a spreading sequence comprising N elements to form an encoded sequence comprising N encoded symbols and each encoded symbol is represented by a chip waveform, the receiver comprising a first channel, the first channel comprising:

   means for obtaining a plurality of analogue values of each chip waveform at a plurality of sampling instants, the sampling instants occurring at irregularly spaced intervals within each chip waveform;
   means for despreading each chip waveform using the complex conjugate of the actual element in the spreading sequence to provide a part estimate of the data symbol; and
   means for accumulating these part estimates of the data symbol to form a grand-total estimate of the transmitted data symbol.

8. A receiver as claimed in claim 7, the receiver further comprising:

   means for digitising the estimate of the transmitted data symbol.

9. A receiver as claimed in one of claims 7 or 8, the receiver further comprising:

   means for compensating the estimate of the transmitted data symbol for distortion caused by propagation of the signal waveform over the air interface.

10. A receiver as claimed in one of claims 7, 8 or 9, wherein the means for obtaining analogue values of each chip waveform is a sample and hold circuit.

11. A receiver as claimed in one of claims 7 to 10, wherein the means for obtaining analogue values of each chip waveform obtains two values for each chip waveform.

12. A receiver as claimed in one of claims 7 to 11, wherein the transmitted data symbol comprises a real part and an imaginary part, wherein the first channel computes the estimate of the real part and the receiver further comprises a second channel for computing the estimate of the imaginary part of the transmitted data symbol, the second channel comprising:

   means for obtaining a plurality of analogue values of each chip waveform at a plurality of sampling instants, the sampling instants occurring at irregularly spaced intervals within each chip waveform;
   means for despreading each chip waveform using the complex conjugate of the spreading sequence to provide an estimate of each encoded symbol; and
   means for accumulating the estimates of the encoded symbols to form an estimate of the transmitted data symbol.

13. A receiver as claimed in one of claims 7 to 12, wherein the modulation technique is quadrature phase-shift-keying QPSK.

14. A RAKE receiver having a plurality of fingers, wherein each finger comprises a correlation receiver as claimed in one of claims 7 to 13.

15. A RAKE receiver as claimed in claim 14, further comprising:

   means for determining the time delay caused by the propagation of the signal waveform through multiple paths and assigning the signal waveform received on each distinct path to a finger.

16. A RAKE receiver as claimed in claim 15, further comprising:

   means for compiling the estimates of the transmitted data symbol provided by each finger on the basis of the determined time delay of each propagation path to form a composite transmitted data symbol estimate.

EP 1 404 028 A1

Fig. 1

Fig. 2

Fig. 3

Fig. 4

Fig. 5

Fig. 6

Fig. 7

Fig. 8

Fig. 9

| | European Patent Office | EUROPEAN SEARCH REPORT | Application Number EP 02 25 6579 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 0 762 645 A (YOZAN INC ;NIPPON TELEGRAPH & TELEPHONE (JP))<br>12 March 1997 (1997-03-12)<br>* abstract *<br>* page 4, line 2 - line 10 *<br>* claim 1 * | 1,2,4-8, 10-16<br><br>3,9 | H04B1/707 |
| X<br><br>A | EP 0 939 500 A (YOZAN INC)<br>1 September 1999 (1999-09-01)<br>* page 3, paragraph 12 - paragraph 13 *<br><br>* figure 1 * | 1,2,5,7, 8,10,12<br>3,4,6,9, 11,13-16 | |
| D,A | DUPPILS M ET AL: "Low power mixed analog-digital signal processing"<br>ISLPED'00: PROCEEDINGS OF THE 2000 INTERNATIONAL SYMPOSIUM ON LOW POWER ELECTRONICS AND DESIGN (CAT. NO.00TH8514), PROCEEDINGS OF ISLPED2000: INTERNATIONAL SYMPOSIUM ON LOW POWER ELECTRONIC DESIGN, RAPALLO, ITALY, 26-27 JULY 2000,<br>pages 61-66, XP010517305<br>2000, New York, NY, USA, ACM, USA<br>* abstract *<br>* page 61, paragraph 1 * | 1-16 | |
| A | US 6 301 294 B1 (HARA KEITA ET AL)<br>9 October 2001 (2001-10-09)<br>* abstract *<br>* figures 1,5,7,37-40 *<br>* column 6, line 35 - line 42 *<br>* column 8, line 7 - line 24 *<br>* column 34, line 48 - column 35, line 12 * | 1-16 | TECHNICAL FIELDS SEARCHED (Int.Cl.7)<br>H04B<br>H04L |

The present search report has been drawn up for all claims

| Place of search | Date of completion of the search | Examiner |
|---|---|---|
| THE HAGUE | 6 March 2003 | Amadei, D |

EPO FORM 1503 03.82 (P04C01)

## ANNEX TO THE EUROPEAN SEARCH REPORT
## ON EUROPEAN PATENT APPLICATION NO.

EP 02 25 6579

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| EP 0762645 | A | 12-03-1997 | JP | 2888782 B2 | 10-05-1999 |
| | | | JP | 9083486 A | 28-03-1997 |
| | | | CN | 1152821 A ,B | 25-06-1997 |
| | | | DE | 69617343 D1 | 10-01-2002 |
| | | | DE | 69617343 T2 | 08-05-2002 |
| | | | DE | 762645 T1 | 18-12-1997 |
| | | | EP | 0762645 A1 | 12-03-1997 |
| | | | US | RE37953 E1 | 31-12-2002 |
| | | | US | 5740096 A | 14-04-1998 |
| EP 0939500 | A | 01-09-1999 | JP | 3328593 B2 | 24-09-2002 |
| | | | JP | 11312952 A | 09-11-1999 |
| | | | CN | 1232317 A | 20-10-1999 |
| | | | EP | 0939500 A2 | 01-09-1999 |
| | | | US | 6389438 B1 | 14-05-2002 |
| US 6301294 | B1 | 09-10-2001 | JP | 11168407 A | 22-06-1999 |

EPO FORM P0459

For more details about this annex : see Official Journal of the European Patent Office, No. 12/82